# EUROPÄISCHE PATENTANMELDUNG

(11) **EP 0 857 815 A2**
(43) Veröffentlichungstag der Anmeldung: **12.08.1998**
(21) Anmeldenummer: 97121233.7
(22) Anmeldetag: 03.12.1997
(51) Int. Cl.: D21B 1/34

(54) **Müllauflöser, insbesondere zum Auflösen von Bio-Haushaltsabfällen**

(30) Priorität: 04.02.1997 DE 19704065
(71) Anmelder: Verwaltungs Lohse GmbH & Co. KG, D-89522 Heidenheim-Oggenhausen (DE)
(72) Erfinder: Warnke, Klaus, 89522 Heidenheim (DE)
(74) Vertreter: Dr. Weitzel & Partner

(57) **Zusammenfassung**

Die Erfindung betrifft einen Stofflöser, insbesondere zum Auflösen von Hausmüll und von Bio-Abfallstoffen unter Überführung in eine Suspension mit einem Behälter;
mit einem Rotor, der eine im wesentlichen vertikale Rotorwelle sowie Rotorflügel aufweist;
wenigstens einige Rotorflügel sind als Schaufeln ausgebildet und derart gestaltet, daß sie der Suspension eine nach unten gerichtete Strömungskomponente verleihen.

## Beschreibung

Die Erfindung betrifft einen Müllauflöser gemäß dem Oberbegriff von Anspruch 1. Solche Müllauflöser sind z. B. bekanntgeworden aus DE 42 35 119 C2. EP 164 428 A1 zeigt und beschreibt eine Anlage zur Auflösung und Sortierung von Altpapier, mit einem Mischer, einem Auflöser und einem Sichter, die in Reihe geschaltet sind.

Der Behälter eines solchen Müllauflösers hat im allgemeinen die Form eines Zylinders, dessen Achse vertikal verläuft, der unten einen Boden hat, und der oben offen ist. Der Rotor befindet sich im allgemeinen im Bodenbereich. Meist fällt seine Drehachse mit der Längsachse des Behälters zusammen, jedoch ist auch eine exzentrische Anordnung möglich. Im allgemeinen besteht der Rotor aus einer ebenen Scheibe. Die Zerkleinerungsflügel sind nach Art von Laufschaufeln einer Kreiselpumpe angeordnet.

Beim Betrieb werden in dem Behälter die zu behandelnden, d.h. aufzulösenden Faserstoffe eingetragen, z. B. Bio-Haushaltsabfälle, und außerdem eine Flüssigkeit, im allgemeinen Wasser. Durch die Arbeit des Rotors werden die Faserstoffe auseinandergerissen und zerkleinert und dabei mit der Flüssigkeit vermischt, so daß eine Suspension entsteht. Die Suspension wird durch den Rotor in eine starke Strömung versetzt. Diese hat - in einem Axialschnitt durch den Müllauflöser gesehen - eine Torusform, wobei sich im Rotorbereich zunächst eine Radialströmung nach außen gegen die Behälterwand hin ausbildet, die sodann nach oben steigt, um im Bereich der Oberfläche wieder radial nach innen zu strömen, und von da aus nach unten zum Zentrum des Rotors hin. Dieses Strömungsbild ist erwünscht; durch die Abwärtsströmung gelangen nämlich die in Suspension befindlichen Feststoffe immer wieder in den Rotorbereich, wo sie bearbeitet werden.

Die Aufbereitung von Faserstoffen, insbesondere von Bio-Haushaltsabfällen und Altpapier, bringt besondere Probleme mit sich, die bereits beim Auflösen beginnen. Besonders unangenehm ist der Anteil von Schwerteilen in Gestalt von Steinen, Knochen, Metall usw. Diese Schwerteile führen beim Auflösevorgang zu erheblichen Verschleißbelastungen der Auflöseorgane.

Das genannte Strömungsbild wird nicht immer im wünschenswerten Maße erreicht. Besonders nachteilig sind tote Winkel, die von der Strömung nicht erfaßt werden. Dort bleibt die Stoffsuspension stehen und wird somit nicht behandelt. Der Müll wird somit nur unvollständig aufgelöst. Auch kann es zu Querströmungen kommen, die denselben Nachteil haben.

Es sind auch schon Stofflöser mit Wendeln bekanntgeworden, die die gewünschte Strömung herbeiführen sollen. Die bisherigen Auflösewendeln, die bei hohen Faserstoffdichten eingesetzt werden, sind nur bei geringen Drehzahlen bezüglich ihrer Fördereigenschaft wirksam. Bei höheren Drehzahlen entstehen in den Wendelgängen Schleuderkräfte, die die Fördereigenschaft auf ein Minimum reduziert. Da aber hohe Drehzahlen wiederum notwendig sind für die Wirksamkeit des Auflöse- und Zerkleinerungsprozesses, stehen die bisherigen Auflösewendeln in einem konstruktiven Widerspruch.

Ferner konnte die Schwerteilausschleusung aus baulichen Gründen nur im Mantelbereich des Behälters aneordnet werden. Dies hatte zur Folge, daß nur besonders schwere Teile in den Schleusenschacht gefallen sind und leichtere, sandige Teile in der Bio-Abfallmasse mitgeschwommen sind.

Der Erfindung liegt die Aufgabe zugrunde, einen Stofflöser der genannten Art derart zu gestalten, daß eine starke und gleichförmige Strömung in dem genannten Sinne eintritt, und daß sichergestellt wird, daß die gesamte, im Behälter befindliche Stoffsuspension einer Auflösung unterzogen wird.

Diese Aufgabe wird durch die Merkmale von Anspruch 1 gelöst. Damit läßt sich folgendes erreichen: Auch bei hoher Drehzahl des Rotors und bei hohem Trockengehalt der Suspension kommt es zu einer Strömung der Suspension in axialer Richtung im Bereich des Rotors von oben nach unten. Es wird eine optimale Auflösung von Bio-Abfällen und allen anderen schwierigen Abfällen erzielt.

Durch eine besondere Ausbildung des Rotors im unteren Bereich wird eine optimale Rotationsströmung und damit eine sehr gute Abscheidung aller Schwer- und Sandbestandteile erzielt.

Weitere wichtige Merkmale sind Strömungsleitbleche oder Wirbelbleche im unteren Bereich des Auflöserotors sowie Leitbleche am kegeligen Bodenteil des Behälters.

Die Erfindung ist anhand der Zeichnung näher erläutert. Darin ist im einzelnen folgendes dargestellt:
- Fig. 1: zeigt in schematischer Darstellung einen Stofflöser in Seitenansicht.
- Fig. 2: zeigt den Rotor in vergrößerter Darstellung.
- Fig. 3: zeigt wiederum den Rotor in perspektivischer Ansicht von schräg oben.
- Fig. 4: zeigt eine Rotorschaufel in einer Schnittansicht gemäß der Schnittlinie A-A in Fig. 2.
- Fig. 5: zeigt eine Draufsicht auf den Rotor.
- Fig. 6: ist eine Ansicht auf den Gegenstand von Figur 2 in Blickrichtung des Pfeiles P.
- Fig. 7: zeigt den trichterförmigen Behälterboden in einer Draufsicht von oben.

Der Stofflöser weist einen Behälter 1 auf. Dieser ist im vorliegenden Falle zylindrisch. Sein Hauptteil ist kreisförmig. Die Umfangswand trägt auf ihrer Innenseite Rippen 1.1. Der Bodenteil 1.2 des Behälters 1 ist kegelstumpfförmig und weist ebenfalls eine Anzahl von Innenrippen auf, die entlang der Mantelfläche von oben nach unten verlaufen. An den Bodenteil 1.2 ist eine Schleuse angeschlossen. Diese umfaßt zwei Ventile 1.3 und 1.4.

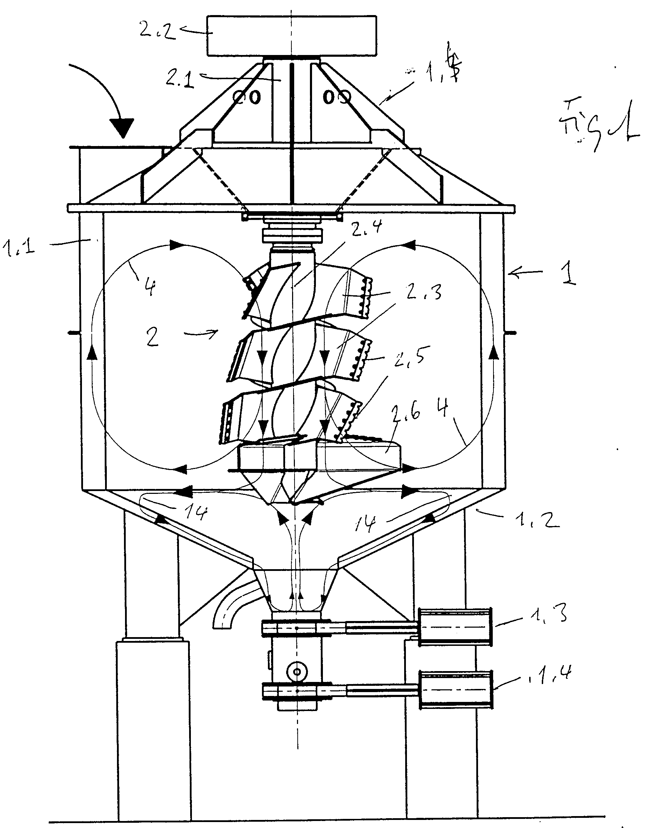

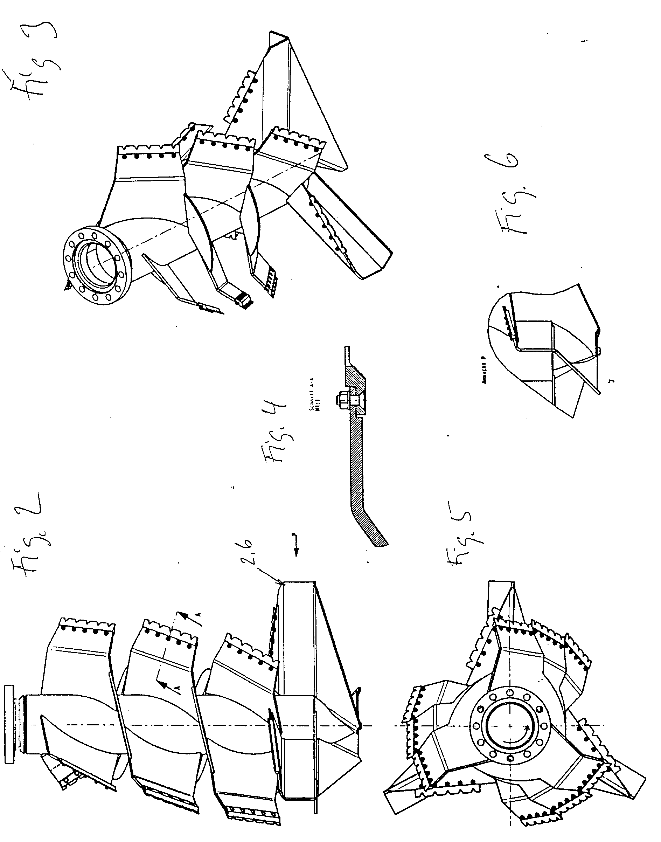

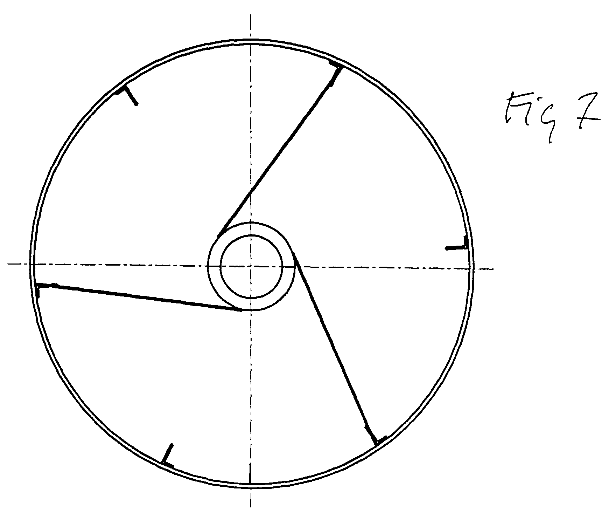

Man erkennt ferner ein Oberteil 1.4 des Behälters. Dieser trägt einen Rotor 2 mit einer Rotorwelle 2.1, einer Antriebsscheibe 2.2 sowie einer Vielzahl von Schaufeln 2.3. Auf die Gestalt der Schaufeln kommt es gemäß der Erfindung besonders an. Man erkennt die Gestalt der Schaufeln besonders gut aus den Figuren 2 bis 5.

Die Schaufeln sind in jedem Falle derart gestaltet, daß sie der Suspension im Bereich des Rotors 2 eine nach unten gerichtete Strömungskomponente verleihen. Auf diese Weise kommt die torusförmige Strömung 4 zustande: Die Suspension strömt im Rotorbereich von oben nach unten, sodann im Bereich des Bodenteiles 1.2 mehr oder minder radial nach außen, sodann im Bereich der Wandung des zylindrischen Teiles des Behälters 1 im wesentlichen axial nach oben, und schließlich wieder im wesentlichen radial nach innen zum Rotor 2 hin.

Um dies zu erreichen, sind die Schaufeln im vorliegenden Falle gegen die Rotorachse 2.4 geneigt angeordnet. Die Drehrichtung ist aus Figur 5 erkennbar - siehe Pfeil. Es ist aber auch möglich, den Rotor im Gegensinne umlaufen zu lassen.

Wie man sieht, sind die freien Enden der Schaufeln 2.3 abgewinkelt, und zwar derart, daß eine nach unten gerichtete Komponente vorliegt.

Die freien Enden der Schaufeln 2.3 sind jeweils mit scharfen Zähnen 2.5 versehen. Diese Zähne 2.5 bewirken das Zerschlagen der im Müll enthaltenen Brocken und damit das Auflösen des Mülls.

Wie man sieht, findet eine besondere Strömung 14 im Bodenteil 1.2 statt - siehe dort die Pfeile. Man beachte auch die besondere Gestaltung des Rotors 2 in dessen unterem, frei auskragenden Teil an der Übergangsstelle zwischen dem zylindrischen Teil des Behälters 1 und dem Bodenteil 1.2. Diese Gestaltung ergibt sich insbesondere aus den Figuren 2 und 6. Dort sind Flügelkörper 2.6 vorgesehen, die einen größeren Flugkreis als die Schaufeln 2.3 beschreiben, und die auf ihrer dem Bodenteil 1.2 zugewandten Seite kegelstumpfförmig sind.

Der Rotor 2 ist im Oberteil 1.4 des Behälters 1 fliegend gelagert.

Wie man aus den Figuren 1, 2, 3 und 5 erkennt, sind die Schaufeln 2.3 des Rotors sternartig angeordnet. Sie verlaufen im wesentlichen radial zur Rotorachse 2.4. Sie können aber auch jeweils gegen den Radius geneigt sein.

Die Figuren 1, 2 und 3 zeigen ferner, daß drei Schaufelgarnituren entlang der Rotorachse angeordnet sind. Jede Schaufelgarnitur umfaßt drei Rotorschaufeln.

Der Stofflöser kommt nicht nur zum Behandeln von Müll, sondern auch von allen möglichen anderen Abfallstoffen in Betracht, beispielsweise von Altpapier.

## Patentansprüche

1. Stofflöser, insbesondere zum Auflösen von Hausmüll und von Bio-Abfallstoffen unter Überführung in eine Suspension
1.1 mit einem Behälter (1);
1.2 mit einem Rotor (2), der eine im wesentlichen vertikale Rotorwelle (2.1) sowie Rotorflügel (2.3) aufweist;
1.3 wenigstens einige Rotorflügel sind als Schaufeln (2.3) ausgebildet und derart gestaltet, daß sie der Suspension eine nach unten gerichtete Strömungskomponente verleihen.

2. Stofflöser nach Anspruch 1, dadurch gekennzeichnet, daß wenigstens einige der Schaufeln (2.3) wenigstens an ihren freien Enden nach unten abgewinkelt sind.

3. Stofflöser nach Anspruch 1 oder 2, dadurch gekennzeichnet, daß wenigstens einige der Schaufeln (2.3) gegen die Rotorachse (2.4) geneigt sind.

4. Stofflöser nach Anspruch 3, dadurch gekennzeichnet, daß die Schaufelneigung verstellbar ist.

5. Stofflöser nach einem der Ansprüche 1 bis 4, dadurch gekennzeichnet, daß die Schaufeln (2.3) an ihren freien Enden Zerkleinerungswerkzeuge (2.5) zum Behandeln der Suspension aufweisen.

6. Stofflöser nach einem der Ansprüche 1 bis 5, dadurch gekennzeichnet, daß der Rotor wenigstens eine Schaufelgarnitur in einer sternförmigen Anordnung aufweist.

7. Stofflöser nach Anspruch 6, dadurch gekennzeichnet, daß zwei oder mehrere Schaufelgarnituren entlang der Rotorachse (2.4) angeordnet sind.
